# EUROPEAN PATENT SPECIFICATION

(11) **EP 2 039 616 B1**
(45) Date of publication and mention of the grant of the patent: **25.04.2012**
(21) Application number: 08164716.6
(22) Date of filing: 19.09.2008
(51) Int. Cl.: B65D 21/02, B65D 85/60, B65D 81/36

(54) **A container for surprise gifts which can be coupled to a food product of the lollipop type**
Kombinationsbehälter für Überraschungsgeschenke und Lebensmittelprodukt wie Lutschbonbon
Récipient pour un cadeau-surprise, pouvant être couplé à un produit alimentaire du type sucette

(30) Priority: 21.09.2007 IT TO20070662
(43) Date of publication of application: 25.03.2009
(73) Proprietor: Soremartec S.A., 6700 Arlon (BE); Ferrero S.p.A., 12051 Alba (Cuneo) (IT); Ferrero Offene Handelsgesellschaft m.b.H., 35260 Stadtallendorf (DE)
(72) Inventor: Canuto, Franco, 12050 Racca di Guarene (Cuneo) (IT)
(74) Representative: Rambelli, Paolo

(56) References cited:
- EP-A- 1 464 262
- DE-U1- 29 614 575
- DE-U1-202006 007 889
- GB-A- 2 324 021
- JP-A- 11 171 260

## Description

The present invention relates to a container for surprise gifts, intended to be used, for example, for containing gift articles or confectionary products and also intended to be combined with a food product of the lollipop type.

The invention also relates to a wrapping comprising this container.

A container of the abovementioned type is for example described in WO-A-00/44647, where the container comprises two plastic half-shells which can be joined together along their openings so as to form a containing cavity. The containing cavity contains the edible part of a lollipop and an accessory item such as a surprise article.

A container inside which the edible part of a lollipop is inserted is also described in US-A-5 773 058.

A problem of the container according to WO-A-00/44647 consists in the fact that the accessory item contained inside the container, not being fixed in any way to the latter, may damage the edible part of the lollipop should the container be moved repeatedly.

Moreover, when opening the container in order to remove the lollipop, the accessory item may accidentally fall out.

DE 20 2006 007 889 U1 describes a container for granular material according to the preamble of claim 1, wherein the container has a removable lid with a moulded recess to hold a scoop with which the material is dispensed.

One object of the invention is to provide a novel container for surprise gifts, of the type specified in the preamble of the description, which is formed so as to avoid the abovementioned problems.

This object is achieved by means of a container such as that defined in the claims which follow.

The subject of the invention is a container for surprise gifts or similar accessories, which can be combined with a food product of the lollipop type, where the container comprises two plastic half-shells which can be joined together mouth to mouth so as to form a containing cavity, characterized in that at least one of the two half-shells is shaped so as to define a housing recess able to house a head part of the food product of the lollipop type, in which, in the condition where the two half-shells are joined together, the containing cavity is closed and separated from the housing recess.

The invention also relates to a wrapping including a container as defined above, and a food product of the lollipop type comprising a head part and a support stem, the head part of the food product being housed inside the housing recess.

Particular embodiments form the subject of the dependent claims, the content of which is to be regarded as forming an integral part of the present description.

According to a further preferred aspect, the two half-shells can be joined together by means of interlocking means.

Preferably, the contour of the opening of one of the half-shells has a collar designed to engage with a corresponding portion of the other half-shell.

According to a further preferred aspect, both the half-shells have a semi-ovoidal shape, with an ovoidal profile of the opening, so that the container, when in the condition where the two half-shells are joined together, has an ovoidal form.

According to another preferred aspect, the half-shells are connected together by means of a hinge member integral with the two half-shells.

Preferably, the hinge member is a film hinge member which extends over a section of the mouth contour of the two half-shells.

Advantageously, the film hinge member also has an axis of rotation which is substantially parallel to the greater longitudinal axis of the area defined by the mouth contour. Alternatively, in the case where the container has an elongated body in which the plane defined by the mouth contour the two half-shells is substantially perpendicular to the greater longitudinal dimension of the elongated body, the film hinge member preferably has an axis of rotation substantially perpendicular to the greater longitudinal axis of the area defined by the mouth contour.

According to a further preferred aspect, in the case where the half-shells are connected together by means of a hinge member integral with the two half-shells and can also be joined together by means of an interlocking means, the two half-shells are formed as one piece obtained by means of injection moulding.

According to yet another preferred aspect, the wall of at least one of the half-shells has, in the vicinity of the hinge member, at least one line with a weakened wall thickness, which extends over a section of said wall and is prone to breakage following stresses which are applied to the body of the half-shell and/or to the hinge member which connects together the two half-shells and are likely to cause breakage of said hinge member.

Preferably, said at least one wall with a weakened wall thickness has a thickness such that it is prone to break before breakage of the hinge member connecting the two half-shells.

Advantageously, at least one of the two half-shells, or preferably both the half-shells, have a pair of lines with a weakened wall thickness which extend over a section of the wall of the respective half-shell, each in the vicinity of the lateral ends of the hinge member.

Preferably, the two weakened wall thickness lines forming each pair are parallel to each other or diverge from each other towards their ends.

Even more preferably, the lines with a weakened wall thickness forming said pair define between them a containing wall part of the respective half-shell in the form of a tongue which, following breakage of said lines, connects the containing wall of the respective half-shell to the hinge member.

Further characteristic features and advantages of the invention will emerge from the detailed description which follows, provided with reference to the accompanying drawings in which:
Figure 1 is a perspective view of a container according to the invention in the open configuration;
Figure 2 is a plan view of the container according to Figure 1;
Figure 3 is a partially sectioned view of the container according to Figure 1, along the line A-A of Figure 2;
Figure 4 is a bottom view of a half-shell of the container according to Figure 1;
Figure 5 is a front view of the half-shell according to Figure 4;
Figure 6 is a side elevation view of the half-shell according to Figure 4;
Figure 7 is a side elevation view of a variant of the container according to Figure 1;
Figure 8 is a perspective view of the container according to Figure 7 in the open configuration;
Figure 9 is a perspective view of a further variant of the container according to Figure 1; and
Figure 10 is a perspective view of the container according to Figure 9 in the closed configuration.

With reference to the drawings, a container according to the invention, which is denoted overall by 1, comprises a first and a second half-shell 2, 4 which are generally made of injection-moulded or thermoformed plastic.

The two half-shells can be joined together mouth to mouth so as to form a containing cavity 1a intended to contain an accessory, a surprise article or a food product. If it is intended to form a stable connection between the two half-shells which may nevertheless be easily released by the user, mutual engagement means may be provided, said means consisting for example of a collar (not shown) which is mounted on one of the two half-shells and is designed to engage with the opening portion of the other half-shell.

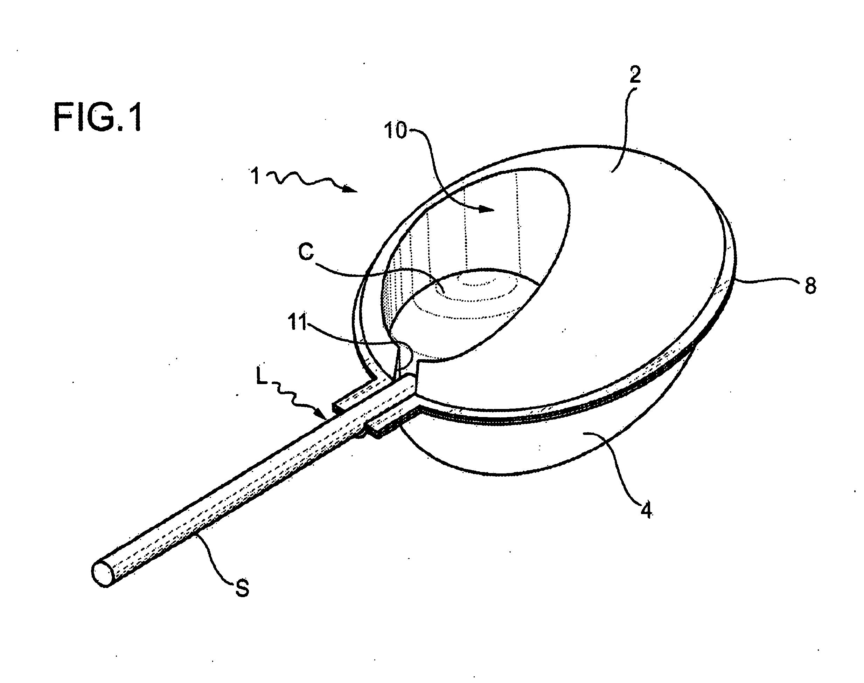

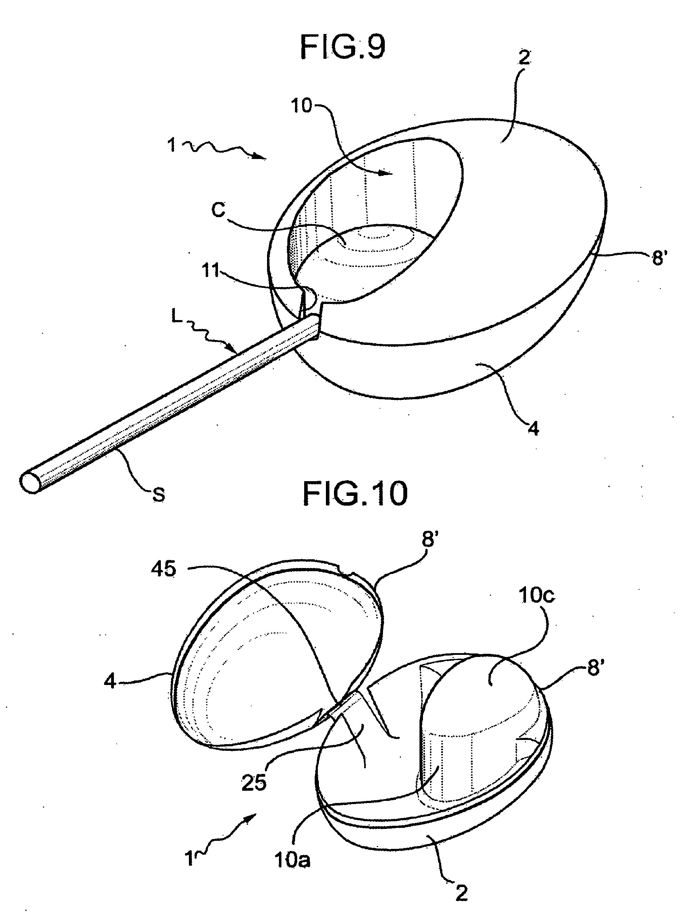

In the closed configuration, namely in the condition where the two half-shells 2 and 4 are joined together, the container 1 generally has an elongated form. Moreover, the container has a mouth plane, defined by the mouth contours of the two half-shells 2, 4, which is parallel or substantially parallel to the greater longitudinal dimension X of the container itself. In the containers shown in Figures 1 to 8, these mouth contours, which are denoted by 8, are flanged. In the variant according to Figures 9 and 10 the two half-shells can be joined together by means of an interlocking system. Therefore, while as regards the other characteristics the two half-shells of the variant according to Figs. 9 and 10 are identical to those of Figs. 1 to 6, they differ from the latter in that the mouth contours, denoted by 8', do not have flanges. Instead, the mouth contour 8' of the half-shell 2 has a collar designed to engage with a corresponding portion of the other half-shell 4. According to a further variant (not shown), the plane defined by the mouth contour of the two half-shells is substantially perpendicular to the greater longitudinal dimension of the container.

According to the invention, at least one of the two half-shells 2, 4 is shaped so as to define a housing recess 10 able to house an edible head part C of a food product L of the lollipop type. A "food product of the lollipop type" is understood as meaning a food product comprising the edible head part C, of varying shape, and a stem portion S designed to support the edible head part C so as to allow it to be held in one hand. In the condition where the two half-shells 2, 4 are joined together, the containing cavity 1a is closed and separated from the housing recess 10.

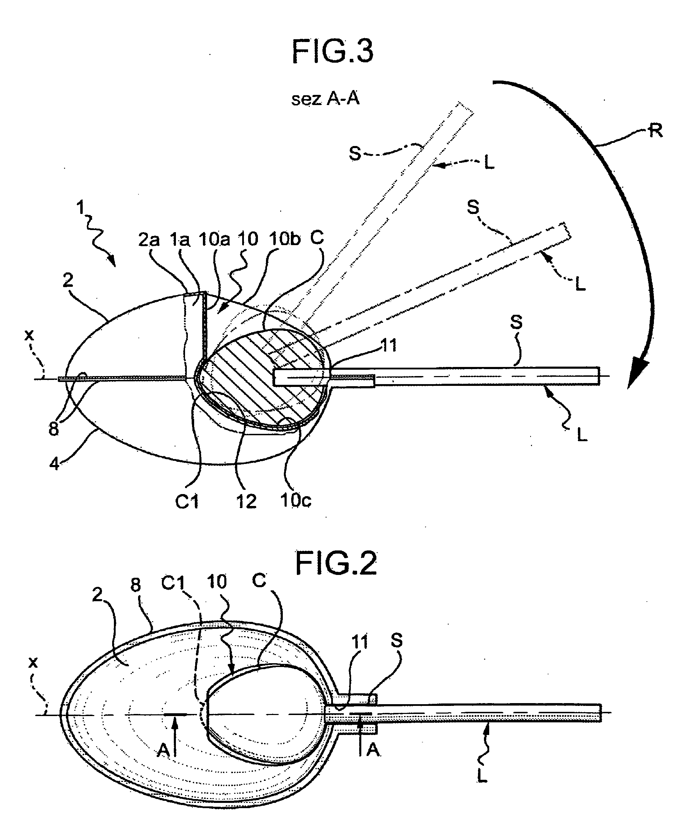

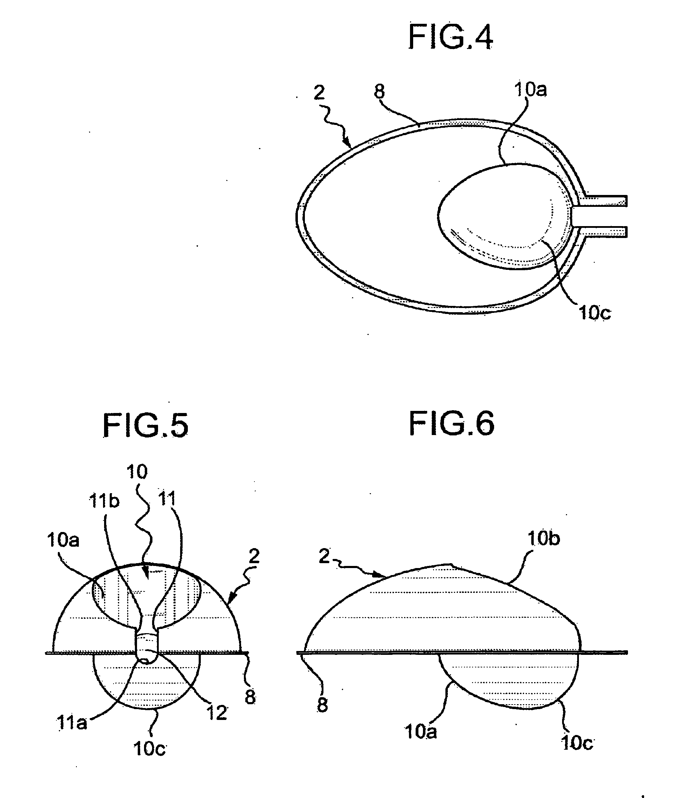

In the preferred embodiment shown in the figures, the housing recess 10 is formed in only one of the two half-shells 2. The half-shell 2 which has the recess 10 is shown on its own in Figures 4 to 6. The recess 10 is delimited by a recess wall 10a connected to the wall 2a of this half-shell 2 and has an opening 10b at the level of the outer surface of the half-shell. As can be seen clearly from Figure 2, the recess wall 10a acts as a separator between the recess 10 and the containing cavity 1a.

As can be seen in Figures 3, 5 and 6, the wall 10a of the housing recess 10 extends from the wall 2a of the half-shell 2 so as to project beyond the plane defined by the mouth contour 8; 8' of the half-shell 2.

With reference to Figures 1, 2 and 5, the housing recess 10 at one end of the half-shell 2 is connected to a groove 11 arranged parallel to the greater longitudinal dimension of the elongated body of the container 1. This groove 11 is designed to house the stem portion S of the food product L of the lollipop type. The groove 11 has a bottom surface 11a which is arranged substantially in the vicinity of the plane defined by the mouth contour 8; 8' of the half-shell 2. This arrangement, together with the fact that the wall 10a of the housing recess 10 extends so as to project from the plane of the opening of the half-shell, allows the food product L to be arranged such that its stem S is arranged in the mouth plane of the half-shell 8. This arrangement is particularly pleasing from an aesthetic point of view. The containers according to Figures 1 to 8 also have an extension to the flange of the mouth contour 8 which is adjacent to the groove 11 and which extends along the stem S. In the variant according to Figures 9 and 10 there is no such extension.

Preferably, the groove 11 has a narrowed portion 11b - not distinguishable in the figures - which is arranged in the vicinity of the bottom surface 11a of the groove. This narrowed portion 11b will allow releasable locking of the stem portion S of the food product L inside the groove 11.

A particularly preferred configuration is the one in which both the half-shells 2, 4 have a semi-ovoidal shape, but it is understood that other forms may be considered such as, for example, a form which has opposite sides with straight central sections which are substantially parallel to each other and connected together by arched sides which are for example substantially circular. The closed container therefore has an egg shape formed by two half-shells which are substantially symmetrical with respect to each other, except for the recess 10 formed in one of them; as mentioned above, other forms such as for example an ellipsoidal form may be considered.

As can be seen in particular in Fig. 3, the wall 10a of the housing recess 10, on the opposite side to the groove 11, has, formed therein, an undercut 12 designed to receive an apex portion C1 of the edible head part C of the food product L of the lollipop type, which head part, in the embodiment shown, also has a substantially ovoidal shape. Figure 3 illustrates moreover the method of inserting the head part C of the product L into the recess 10a. The initial and intermediate insertion positions are shown in dot-dash lines. Firstly, the head part C is inserted so that its apex portion C1 engages with a bottom portion 10c of the recess wall 10a. The head part C is then rotated, in the direction of the arrow R, and at the same time the apex portion C1 is slid towards the undercut 12 until this apex portion C1 engages completely with the undercut 12, and the stem S is inserted inside the groove 11 of the container 1, assuming the final configuration shown in continuous lines. As can be seen, the bottom portion 10c of the recess wall 10a, which extends from the undercut 12 to the groove 11, is formed so as to imitate the profile of the head part C of the food product. In order to extract the head part C from the housing recess 10, using the support stem S the movements indicated above are performed, with a reverse sequence, in the opposite direction of rotation to the direction indicated by the arrow R.

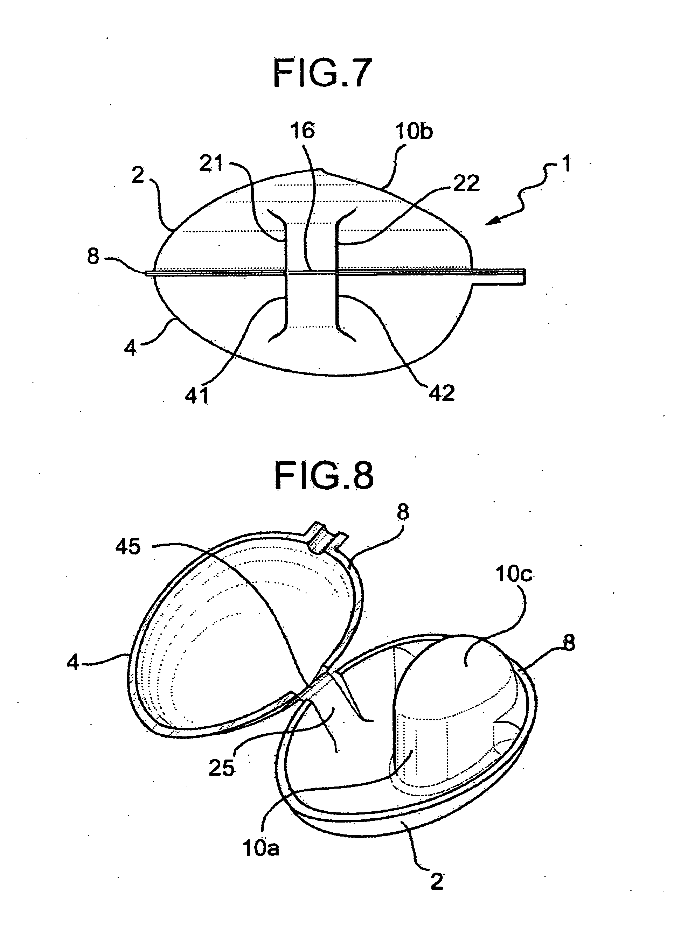

Figures 7 and 8 show a variant of the container 1 in which the two half-shells are connected together by means of a hinge member 16 which is integral with the body of the two half-shells, preferably being of the type consisting of a film hinge, which extends along a section of the mouth perimeter of the two half-shells. A hinge member of this type is described in WO 2007/074355. However, it is also possible to consider using, for example, two or more separate hinge parts which are separate from each other.

Preferably, the hinge member 16 has an axis of rotation which is substantially parallel to the greater axis X of the mouth contour. According to a variant (not shown), the axis of rotation is substantially perpendicular to the greater axis of the container.

The side wall of at least one of the two half-shells has at least one line with a weakened or smaller wall thickness 21, 22, 41 and/or 42, or preferably a pair of these lines arranged in the vicinity of the ends of the hinge member 16. Preferably, both the half-shells have a pair of the abovementioned weakened thickness lines. The two lines forming the pair extend along a section of the wall of the respective half-shell; the two lines may be parallel to each other or diverge towards the end of the half-shell. In the embodiment shown, the two lines - for example 21, 22 - are parallel to each other along a first section adjacent to the hinge and diverge along their end portion.

The abovementioned weakened thickness lines have essentially the function of preventing or reducing the risk that the stresses exerted as a result of - possible repeated - opening and closing of the container may cause the breakage of the hinge member, with the consequent undesirable separation of the two half-shells.

The mechanical strength characteristics of the weakened thickness lines - and in particular their wall thickness - are determined depending on the mechanical strength characteristics of the hinge member between the two half-shells so that mechanical (tensile, compressive or torsional) stresses applied to one half-shell or to both of them cause firstly breakage of one or both the lines with a weakened wall thickness. With breakage of both the lines forming a pair (for example 21, 22), the two half-shells remain hinged together by means of the hinge member 16 and by means of the half-shell side wall portion 25 situated between the two broken weakened thickness lines and having the form of a tongue.

The tongue region 25 which, owing to the flexibility of the side wall of the half-shell, also has good flexibility properties, acts as an extension of the hinging arm between the two half-shells.

When, in accordance with a preferred embodiment, a second pair of lines with a weakened wall thickness (for example 41, 42) is present on the wall of the other half-shell, the application of further stresses which per se would be likely to cause the breakage of the hinge member causes - first and foremost - the breakage of these lines, resulting in the formation of a tongue region 45 situated between the broken lines 41, 42. It is understood that breakage of the weakening lines forming the first and second pair may be simultaneous or sequential and that this breakage does not necessarily occur in the time order described here by way of example.

Figure 8 shows a container according to the invention in which breakage of both pairs of weakening lines has occurred. It will be noted how the tongues 25 and 45, after breakage of the respective weakening lines, are in turn hinged with the body of the respective half-shell, such that breakage of the weakening lines results in the formation of further hinging regions between the two half-shells.

Figures 9 and 10 show a particularly preferred variant of the container according to the invention. According to this variant, the two half-shells 2 and 4 are connected together by means of a hinge member 16 integral with the body of the two half-shells and can be joined together along their openings by means of the interlocking system mentioned above. Even more preferably, these half-shells 2 and 4 are obtained by means of a single mould using the injection moulding technique.

The container according to the invention is intended to be inserted in its closed configuration, including inside it an accessory, a surprise article or a food product and in the condition combined with the food product L of the lollipop type, inside a wrapping which envisages a flexible wrapping film (not shown), for example a heat-shrinkable film, which surrounds the two half-shells 2, 4 so as to cover also the housing recess 10, while allowing the support stem S of the food product to protrude.

It is understood, moreover, that the product of the lollipop type will generally be provided with a covering of foil material which surrounds the head part thereof so as to protect it from contact with the walls of the housing recess and the external environment.

According to a further embodiment (not shown), the container according to the invention is designed so that it may be used as part of an assembly kit for constructing a toy, such as a puppet. This assembly kit also comprises a plurality of completion parts (for example legs, arms and head of the puppet) which can be assembled along the mouth contour of the two half-shells. So as to allow assembly of the completion parts holes are formed along the mouth contour of the two half-shells (one half of each hole is formed on the edge of one of the half-shells, and the other half is formed correspondingly on the edge of the other half-shell), said holes being designed to be engaged by corresponding projections provided on the completion parts. Advantageously, the completion parts have dimensions such that they be stowed inside the containing cavity of the container.

Finally, it is understood that the characteristic features which have been described with reference only to certain specific variants, may be combined, provided that they are compatible, with the characteristic features of the other variants described or other variants which may occur to a person skilled in the art, without thereby departing from the scope of the present invention.

## Claims

1. Container (1) for surprise gifts or similar accessories, comprising two plastic half-shells (2, 4) which can be joined together mouth to mouth so as to form a containing cavity (1a), wherein at least one of the two half-shells (2) is shaped so as to define a housing recess (10) and wherein, in the condition where the two half-shells are joined together, the containing cavity (1a) is closed and separated from the housing recess (10), **characterised in that** said container is adapted to be combined with a food product (L) of the lollipop type, being said housing recess (10) adapted to house a head part (C) of said food product.

2. Container according to Claim 1, which has an elongated body in which the plane defined by the mouth contour (8; 8') of the two half-shells is substantially parallel to the greater longitudinal dimension (X) of the elongated body.

3. Container according to Claim 1, which has an elongated body in which the plane defined by the mouth contour of the two half-shells is substantially perpendicular to the greater longitudinal dimension of the elongated body.

4. Container according to one of the preceding claims, in which the housing recess is formed in only one (2) of the two half-shells, being delimited by a recess wall (10a) connected to the wall (2a) of this half-shell and having an opening (10b) at the level of the outer surface of the half-shell.

5. Container according to Claim 4, in which the wall (10a) of the housing recess (10) extends from the wall (2a) of the half-shell (2) so as to project beyond the plane defined by the mouth contour (8; 8') of the half-shell.

6. Container according to Claim 5, in which the housing recess at one end of the half-shell is connected to a groove (11), said groove being designed to house a stem portion (S) of the food product of the lollipop type.

7. Container according to Claim 6, in which the groove has a bottom surface (11a) arranged substantially in the vicinity of the plane defined by the mouth contour of the half-shell.

8. Container according to Claim 7, in which the groove has a narrowed portion (11b) arranged in the vicinity of the bottom surface and designed to allow releasable fixing of the stem portion of the food product inside the groove.

9. Container according to one of Claims 6 to 8, in which the wall of the housing recess, on the opposite side to the groove, has formed therein an undercut (12) designed to receive an apex portion (C1) of the edible part of the food product of the lollipop type.

10. Container according to Claim 9, in which a bottom portion (10c) of the recess wall (10a) extending from the undercut (12) to the groove (11) is formed so as to imitate the profile of the head part (C) of the food product.

11. Container according to any one of the preceding claims, including, inside the containing cavity, an accessory, a surprise article or a food product.

12. Container according to any one of the preceding claims, comprising a food product (L) of the lollipop type, comprising a head part (C) and a supporting stem (S), the head part (C) being housed in said housing recess (10), and a plurality of completion parts which can be assembled along the mouth contour of the two half-shells and which are housed inside said containing cavity (1a), wherein said half-shells (2, 4) have, along their mouth contour, holes designed to be engaged by corresponding projections provided on said completion parts.

13. Wrapping including a container according to any one of the preceding claims, and a food product of the lollipop type, comprising a head part (C) and a support stem (8), the head part (C) of the food product being housed inside the housing recess (10).

14. A wrapping according to Claim 13, also comprising a flexible wrapping film wound around the two half-shells so as to cover the housing recess, allowing the support stem (S) of the food product to protrude.

15. A wrapping according to Claim 13 or 14, in which the product of the lollipop type is provided with a wrapping of foil material which surrounds the head part thereof, so as to protect it from contact with the walls of the housing recess and the external environment.

## Patentansprüche

1. Behälter (1) für Überraschungsgeschenke oder ähnliche Kleinteile mit zwei Plastikhalbschalen (2,4), die miteinander Mund-an-Mund verbunden werden können, sodass sie einen Aufbewahrungsraum (1a) bilden, wobei zumindest eine der zwei Halbschalen (2) so geformt ist, dass sie eine Gehäuseaussparung (10) definiert, und wobei in dem Fall, wo die zwei Halbschalen miteinander verbunden sind, der Aufbewahrungsraum (1a) geschlossen ist und von der Gehäuseaussparung (10) getrennt ist, **dadurch gekennzeichnet, dass** der Behälter geeignet ist, mit einem Lebensmittel (L) der Lutscher-Art kombiniert zu werden, wobei die Gehäuseaussparung (10) geeignet ist, einen Kopfteil (C) des Lebensmittels aufzunehmen.

2. Behälter nach Anspruch 1, der einen gestreckten Körper aufweist, bei dem die Ebene, die durch das Mundprofil (8; 8') der zwei Halbschalen definiert ist, im Wesentlichen parallel zu der größeren Längsabmessung (X) des gestreckten Körpers ist.

3. Behälter nach Anspruch 1, der einen gestreckten Körper aufweist, bei dem die Ebene, die durch das Mundprofil der zwei Halbschalen definiert ist, im Wesentlichen senkrecht zu der größeren Längsabmessung des gestreckten Körpers ist.

4. Behälter nach einem der vorhergehenden Ansprüche, bei dem die Gehäuseaussparung nur in einer (2) der zwei Halbschalen ausgebildet ist, wobei sie durch eine Aussparungswand (10a) begrenzt ist, die mit der Wand (2a) dieser Halbschale verbunden ist, und eine Öffnung (10b) an dem Niveau der äußeren Oberfläche der Halbschale aufweist.

5. Behälter nach Anspruch 4, bei dem sich die Wand (10a) der Gehäuseaussparung (10) von der Wand (2a) der Halbschale (2) erstreckt, sodass sie über die Ebene vorsteht, die durch das Mundprofil (8; 8') der Halbschale definiert ist.

6. Behälter nach Anspruch 5, bei dem die Gehäuseaussparung an einem Ende der Halbschale mit einer Nut (11) verbunden ist, die so gestaltet ist, dass sie einen Stielabschnitt (S) des Lebensmittels der Lutscher-Art aufnimmt.

7. Behälter nach Anspruch 6, bei dem die Nut eine Bodenoberfläche (11a) aufweist, die im Wesentlichen in der Nähe der Ebene angeordnet ist, die durch das Mundprofil der Halbschale definiert ist.

8. Behälter nach Anspruch 7, bei dem die Nut einen verengten Abschnitt (11b) aufweist, der in der Nähe der Bodenoberfläche angeordnet ist und so gestaltet ist, dass ein lösbares Anbringen des Stielabschnitts des Lebensmittels innerhalb der Nut erlaubt ist.

9. Behälter nach einem der Ansprüche 6 bis 8, bei dem die Wand der Gehäuseaussparung an der der Nut gegenüberliegenden Seite darin eine Hinterschneidung (12) aufweist, die so gestaltet ist, dass sie einen Scheitelbereich (C1) des essbaren Teils des Lebensmittels der Lutscher-Art aufnimmt.

10. Behälter nach Anspruch 9, bei dem ein Bodenabschnitt (10c) der Aussparungswand (10a), der sich von der Hinterschneidung (12) zu der Nut (11) erstreckt, so ausgebildet ist, sodass er den Umriss des Kopfteils (C) des Lebensmittels nachahmt.

11. Behälter nach einem der vorhergehenden Ansprüche, der innerhalb des Aufbewahrungsraums ein Kleinteil, einen Überraschungsartikel oder ein Lebensmittel aufweist.

12. Behälter nach einem der vorhergehenden Ansprüche mit einem Lebensmittel (L) der Lutscher-Art mit einem Kopfteil (C) und einem Trägerstiel (S), bei dem der Kopfteil (C) in der Gehäuseaussparung (10) aufgenommen ist, und mehreren Ergänzungsteilen, die entlang des Mundprofils der zwei Halbschalen zusammengesetzt sein können und innerhalb des Aufbewahrungsraums (1a) aufgenommen sind, wobei die Halbschalen (2, 4) entlang ihres Mundprofils Öffnungen aufweisen, die so gestaltet sind, dass sie durch entsprechende Vorsprünge in Eingriff kommen, die an den Ergänzungsteilen vorgesehen sind.

13. Umhüllung mit einem Behälter nach einem der vorhergehenden Ansprüche und einem Lebensmittel der Lutscher-Art mit einem Kopfteil (C) und einem Trägerstiel (8), bei welcher der Kopfteil (C) des Lebensmittels innerhalb der Gehäuseaussparung (10) aufgenommen ist.

14. Umhüllung nach Anspruch 13, ferner mit einer flexiblen Umhüllungsschicht, die so um die zwei Halbschalen gewickelt ist, dass sie die Gehäuseaussparung abdeckt, wobei der Trägerstiel (S) des Lebensmittels vorstehen kann.

15. Umhüllung nach Anspruch 13 oder 14, bei der das Produkt der Lutscher-Art mit einer Umhüllung aus Folienmaterial vorgesehen ist, die den Kopfteil davon umgibt, sodass er vor Kontakt mit den Wänden der Gehäuseaussparung und der äußeren Umgebung geschützt ist.

## Revendications

1. Contenant (1) pour cadeaux surprises ou accessoires similaires, comprenant deux moitiés de coque (2, 4) en plastique qui peuvent être reliées l'une à l'autre embouchure contre embouchure afin de former une cavité de confinement (1a), dans lequel au moins l'une des deux moitiés de coque (2) est conformée pour définir un évidement de logement (10) et dans lequel, dans la condition où les deux moitiés de coque sont reliées l'une à l'autre, la cavité de confinement (1a) est fermée et séparée de l'évidement de logement (10), ledit contenant étant **caractérisé en ce qu'**il est apte à être combiné avec un produit alimentaire (L) du type sucette, ledit évidement de logement (10) étant apte à loger une partie tête (C) dudit produit alimentaire.

2. Contenant selon la revendication 1, qui présente un corps allongé dans lequel le plan défini par le contour d'embouchure (8 ; 8') des deux moitiés de coque est sensiblement parallèle à la dimension longitudinale la plus grande (X) du corps allongé.

3. Contenant selon la revendication 1, qui présente un corps allongé dans lequel le plan défini par le contour d'embouchure des deux moitiés de coque est sensiblement perpendiculaire à la dimension longitudinale la plus grande du corps allongé.

4. Contenant selon l'une quelconque des revendications précédentes, dans lequel l'évidement de logement est formé dans une seule (2) des deux moitiés de coque, étant délimité par une paroi d'évidement (10a) reliée à la paroi (2a) de cette moitié de coque et ayant une ouverture (10b) au niveau de la surface externe de la moitié de coque.

5. Contenant selon la revendication 4, dans lequel la paroi (10a) de l'évidement de logement (10) s'étend depuis la paroi (2a) de la moitié de coque (2) de façon à saillir au-delà du plan défini par le contour d'embouchure (8 ; 8') de la moitié de coque.

6. Contenant selon la revendication 5, dans lequel l'évidement de logement, à une extrémité de la moitié de coque, est relié à une gorge (11), ladite gorge étant conçue pour loger une partie tige (S) du produit alimentaire du type sucette.

7. Contenant selon la revendication 6, dans lequel la gorge comporte une surface de fond (11a) agencée sensiblement au voisinage du plan défini par le contour d'embouchure de la moitié de coque.

8. Contenant selon la revendication 7, dans lequel la gorge comporte une partie rétrécie (11b) agencée au voisinage de la surface de fond et conçue pour permettre une fixation amovible de la partie tige du produit alimentaire à l'intérieur de la gorge.

9. Contenant selon l'une des revendications 6 à 8, dans lequel la paroi de l'évidement de logement, sur le côté opposé à la gorge, comporte, formé en son sein, un creux (12) conçu pour recevoir une partie sommet (C1) de la partie comestible du produit alimentaire du type sucette.

10. Contenant selon la revendication 9, dans lequel une partie inférieure (10c) de la paroi d'évidement (10a) s'étendant du creux (12) à la gorge (11) est formée de façon à imiter le profil de la partie tête (C) du produit alimentaire.

11. Contenant selon l'une quelconque des revendications précédentes, comprenant, à l'intérieur de la cavité de confinement, un accessoire, un article surprise ou un produit alimentaire.

12. Contenant selon l'une quelconque des revendications précédentes, comprenant un produit alimentaire (L) du type sucette, comprenant une partie tête (C) et une tige de support (S), la partie tête (C) étant logée dans ledit évidement de logement (10), et une pluralité de parties complémentaires qui peuvent être assemblées le long du contour d'embouchure des deux moitiés de coque et qui sont logées à l'intérieur de ladite cavité de confinement (1a), lesdites moitiés de coque (2, 4) comportant, le long de leur contour d'embouchure, des trous conçus pour être engagés par des saillies correspondantes situées sur lesdites parties complémentaires.

13. Emballage comprenant un contenant selon l'une quelconque des revendications précédentes, et un produit alimentaire du type sucette, comprenant une partie tête (C) et une tige de support (8), la partie tête (C) du produit alimentaire étant logée à l'intérieur de l'évidement de logement (10).

14. Emballage selon la revendication 13, comprenant également un film d'emballage souple enroulé autour des deux moitiés de coque de façon à recouvrir l'évidement de logement, permettant à la tige de support (S) du produit alimentaire de saillir.

15. Emballage selon la revendication 13 ou 14, dans lequel le produit du type sucette est pourvu d'un emballage de matériau en feuille métallique qui entoure sa partie tête afin de la protéger d'un contact avec les parois de l'évidement de logement et l'environnement extérieur.
